# EUROPÄISCHE PATENTANMELDUNG

(11) **EP 3 225 656 A1**
(43) Veröffentlichungstag der Anmeldung: **04.10.2017**
(21) Anmeldenummer: 17151103.3
(22) Anmeldetag: 12.01.2017
(51) Int. Cl.: C08K 3/36, B60C 1/00

(54) **KAUTSCHUKMISCHUNG UND NUTZFAHRZEUGREIFEN**

(30) Priorität: 31.03.2016 DE 102016205302
(71) Anmelder: Continental Reifen Deutschland GmbH, 30165 Hannover (DE)
(72) Erfinder: Glöckner, Andreas, 30823 Garbsen (DE); Caceres, Angelica, 30161 Hannover (DE)
(74) Vertreter: Finger, Karsten

(57) **Zusammenfassung**

Die Erfindung betrifft eine schwefelvernetzbare Kautschukmischung, insbesondere für Laufstreifen von Nutzfahrzeugreifen, die wenigstens einen Dienkautschuk und zumindest eine Kieselsäure mit einer CTAB-Oberfläche (gemäß ASTM D 3765) von 50 bis 130 m²/g und einer Stickstoff-Oberfläche (BET-Oberfläche) (gemäß DIN ISO 9277 und DIN 66132) von 60 bis 140 m²/g enthält. Ferner betrifft die Erfindung einen Nutzfahrzeugreifen, dessen Laufstreifen zumindest zum Teil aus der Kautschukmischung besteht.

Für gute Verarbeitbarkeit und Extrudierbarkeit enthält die Kautschukmischung
- wenigstens einen Dienkautschuk und
- 1 bis 25 phr zumindest einer Kieselsäure mit einer CTAB-Oberfläche (gemäß ASTM D 3765) von 50 bis 130 m²/g und einer Stickstoff-Oberfläche (BET-Oberfläche) (gemäß DIN ISO 9277 und DIN 66132) von 60 bis 140 m²/g.

## Beschreibung

Die Erfindung betrifft eine schwefelvernetzbare Kautschukmischung, insbesondere für Laufstreifen von Nutzfahrzeugreifen, die wenigstens einen Dienkautschuk und zumindest eine Kieselsäure mit einer CTAB-Oberfläche (gemäß ASTM D 3765) von 50 bis 130 m²/g und einer Stickstoff-Oberfläche (BET-Oberfläche) (gemäß DIN ISO 9277 und DIN 66132) von 60 bis 140 m²/g enthält. Ferner betrifft die Erfindung einen Nutzfahrzeugreifen, dessen Laufstreifen zumindest zum Teil aus der Kautschukmischung besteht.

Kautschukmischungen der eingangs genannten Art sowie Fahrzeugreifen mit Laufstreifen aus dieser Kautschukmischung sind z. B. aus der US 2005/0016651 A1 und der WO 00/73092 A1 bekannt.

Die US 2005/0016651 A1 beschreibt Reifenlaufstreifen mit einer Kautschukzusammensetzung, die einen Dienkautschuk, mehr als 80 phr Kieselsäure mit einer BET-Oberfläche von weniger als 130 m²/g, ein Silan-Kupplungsagens zur Anbindung der Kieselsäure an den Dienkautschuk und ein Vulkanisationssystem aus Schwefel, Vulkanisationsbeschleuniger und Zink enthält. Die Kautschukmischung soll zu Laufstreifen mit hohem Abriebwiderstand führen, wobei die Nachteile im Vernetzungsverhalten ausgeräumt werden sollen. Die Reifen mit einer solchen Laufstreifenmischung sollen einen verbesserten Kompromiss zwischen Abrieb, Rollwiderstand und Haftung aufweisen.

Aus der WO 00/73092 A1 sind Kautschukmischungen für Reifenlaufstreifen bekannt, die für niedrigen Rollwiderstand bei gleichbleibendem Abrieb und gleichbleibendem Nassbremsverhalten eine spezielle Kieselsäure enthalten. Die Kieselsäure kann eine BET-Oberfläche von weniger als 130 m²/g und eine CTAB-Oberfläche zwischen 80 und 130 m²/g aufweisen. Die Beispiele zeigen 35 und 65 phr der Kieselsäure in den Kautschukmischungen, wobei die Kieselsäure über ein Silan-Kupplungsagens wie 3,3'-Bis(triethoxysilylpropyl)tetrasulfid (TESPT) an den Kautschuk angebunden ist.

In Laufstreifen für Nutzfahrzeugreifen, d. h. in Reifen für Kraftfahrzeuge, die nach ihrer Bauart und Einrichtung zum Transport von Personen oder Gütern bestimmt sind, oder zum Ziehen von Anhängern, aber keine Personenkraftwagen oder Krafträder sind (z. B. Busse, Lastkraftwagen, Nutzfahrzeuge für Einsatzkräfte, Traktoren, Baustellenfahrzeuge, u. a.), werden üblicherweise geringe Mengen bis zu 20 phr Kieselsäure mit einer BET-Oberfläche von ca. 160 m²/g als inaktiver Füllstoff, d. h. ohne die Anwesenheit von Silan-Kupplungsagenzien, eingesetzt, um als Rissbremse in der Kautschukmischung zu wirken. Bei Verwendung einer solchen Kieselsäure hat es sich jedoch herausgestellt, dass das Verarbeitungsverhalten und dabei insbesondere das Extrusionsverhalten sich verschlechtern.

Der vorliegenden Erfindung liegt nun die Aufgabe zugrunde, eine schwefelvernetzbare Kautschukmischung bereitzustellen, die sich problemlos bei der Reifenherstellung, insbesondere von Laufstreifen von Nutzfahrzeugen, verarbeiten und extrudieren lässt.

Gelöst wird diese Aufgabe durch eine schwefelvernetzbare Kautschukmischung, enthaltend
- wenigstens einen Dienkautschuk und
- 1 bis 25 phr zumindest einer Kieselsäure mit einer CTAB-Oberfläche (gemäß ASTM D 3765) von 50 bis 130 m²/g und einer Stickstoff-Oberfläche (BET-Oberfläche) (gemäß DIN ISO 9277 und DIN 66132) von 60 bis 140 m²/g.

Überraschenderweise hat sich gezeigt, dass bei Verwendung geringer Mengen einer Kieselsäure mit derart niedriger spezifischer Oberfläche, man nennt derartige Kieselsäuren auch "low surface area" Kieselsäuren, das Verarbeitungsverhalten im Vergleich zu einer Mischung mit einer Kieselsäure mit einer Oberfläche von ca. BET-Oberfläche von 160 m²/g deutlich verbessert werden kann. Die Mooney-Viskosität der Kautschukmischung wird signifikant reduziert, wodurch man ein stark verbessertes, glatteres Profil nach Extrusion erhält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen und dadurch festen Kautschuke bezogen.

Die erfindungsgemäße Kautschukmischung enthält wenigstens einen Dienkautschuk. Demnach können auch mehrere Kautschuke im Verschnitt eingesetzt werden.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.
Bei dem wenigstens einen Dienkautschuk handelt es sich vorzugsweise um natürliches Polyisopren (NR) und/oder synthetisches Polyisopren (IR) und/oder Polybutadien (BR, Butadien-Kautschuk) und/oder Styrol-Butadien-Copolymer (SBR, Styrol-Butadien-Kautschuk).

Bei dem natürlichen und/oder synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%.
Ferner ist auch ein Gemisch eines oder mehrerer natürlicher Polyisoprene mit einem oder mehreren synthetischen Polyisoprenen denkbar.

Bei dem Styrol-Butadien-Kautschuk (Styrol-Butadien-Copolymer) kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Bevorzugt sind in jedem Fall Styrol-Butadien-Copolymere mit einem Mw von 250000 bis 600000 g/mol (zweihundertfünfzigtausend bis sechshunderttausend Gramm pro Mol).

Bei dem Butadien-Kautschuk (BR, Polybutadien) kann es sich um alle dem Fachmann bekannten Typen mit einem Mw von 250000 bis 5000000 g/mol handeln. Darunter fallen u. a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%.

Die Kautschukmischung enthält 1 bis 25 phr zumindest einer Kieselsäure mit einer CTAB-Oberfläche (gemäß ASTM D 3765) von 50 bis 130 m²/g und einer Stickstoff-Oberfläche (BET-Oberfläche) (gemäß DIN ISO 9277 und DIN 66132) von 60 bis 140 m²/g. Die Begriffe "Kieselsäure" und "Silika" werden im Rahmen der vorliegenden Erfindung, wie in der Fachwelt üblich, synonym verwendet. Zum Einsatz können z. B. Zeosil^{®}1085 der Firma Solvay, Frankreich oder MFIL-100 der Firma Madhu, Indien kommen.

Gemäß einer vorteilhaften Weiterbildung der Erfindung enthält die Kautschukmischung 10 bis 25 phr zumindest einer Kieselsäure mit einer CTAB-Oberfläche (gemäß ASTM D 3765) von 50 bis 130 m²/g und einer Stickstoff-Oberfläche (BET-Oberfläche) (gemäß DIN ISO 9277 und DIN 66132) von 60 bis 140 m²/g enthält. Diese Mengen haben einen besonders positiven Einfluss auf das Rissverhalten der vulkanisierten Kautschukmischung.

Das Verarbeitungs- und Extrusionsverhalten lässt sich weiter verbessern, indem die Kieselsäure eine CTAB-Oberfläche (gemäß ASTM D 3765) von 70 bis 120 m²/g und eine Stickstoff-Oberfläche (BET-Oberfläche) (gemäß DIN ISO 9277 und DIN 66132) von 80 bis 125 m²/g aufweist.

Es hat sich außerdem für das Abriebverhalten und die Haltbarkeit gegenüber Schnitten und Ablösungen als vorteilhaft erwiesen, wenn die Kautschukmischung 80 bis 100 phr Naturkautschuk enthält.

Die Kautschukmischung kann frei von Silan-Kupplungsagenzien sein. Bei einer derartigen Kautschukmischung hat sich überraschenderweise gezeigt, dass die Rückprallelastizität der vulkanisierten Mischung bei 70 °C reduziert werden kann, was bei Einsatz als Laufstreifen von Fahrzeugluftreifen regelmäßig zu einem reduzierten Rollwiderstand führt. So kann mit einer derartigen Mischung der Zielkonflikt zwischen Rollwiderstand und Verarbeitbarkeit gelöst werden. Gleichzeitig zeichnen sich derartige Mischungen durch einen verbesserten DIN-Abrieb aus, wobei die Zugfestigkeit auf ähnlichem Niveau verbleibt.

Gemäß einer alternativen Ausführungsform der Erfindung, kann die Kautschukmischung 3 bis 10 phf zumindest eines Silan-Kupplungsagenzes enthalten. Dabei verbleibt bei verbessertem Verarbeitungsverhalten das Rissverhalten der vulkanisierten Mischung im Hinblick auf Cut-and-Chip (Schnitte und schuppenartige Ablösungen) auf hohem Niveau.

Die in dieser Schrift verwendete Angabe phf (parts per hundred parts of filler by weight) ist dabei die in der Kautschukindustrie gebräuchliche Mengenangabe für Kupplungsagenzien für Füllstoffe. Im Rahmen der vorliegenden Anmeldung bezieht sich phf auf die vorhandene Kieselsäure bzw. die vorhandenen Kieselsäuren, das heißt, dass andere eventuell vorhandene Füllstoffe wie Ruß nicht in die Berechnung der Menge an Silan-Kupplungsagens mit eingehen.

Die Silan-Kupplungsagenzien sind in der Kautschukindustrie hinlänglich bekannt. Sie reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Derartige Silan-Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH2 oder -Sx- (mit x = 2-8). So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. Die Silan-Kupplungsagenzien können dabei auch als Gemisch mit Industrieruß zugesetzt werden, wie z. B. TESPT auf Ruß (Handelsname X50S der Firma Evonik). Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT^{®} in verschiedenen Varianten von der Firma Momentive, USA, oder solche, die unter dem Namen VP Si 363 von der Firma Evonik Industries vertrieben werden.

Neben den bereits ausführlich erläuterten, erfindungswesentlichen Bestandteilen, kann die Kautschukmischung weitere, in der Kautschukindustrie übliche Bestandteile enthalten. Derartige Bestandteile werden im Folgenden erläutert:

Die Kautschukmischung kann als weiteren Füllstoff Ruß enthalten. Es sind alle dem Fachmann bekannten Ruß-Typen denkbar. Bevorzugt wird jedoch ein Ruß eingesetzt, der eine Jodadsorptionszahl gemäß ASTM D 1510 von 30 bis 180 g/kg, bevorzugt 60 bis 140 kg/g, und eine DBP-Zahl gemäß ASTM D 2414 von 80 bis 200 ml/100 g, bevorzugt 100 bis 200 ml/100g, besonders bevorzugt 90 bis 150 ml/100g, aufweist.

Die erfindungsgemäße Kautschukmischung kann neben Kieselsäure und Ruß noch weitere bekannte polare und/oder unpolare Füllstoffe, wie Alumosilicate, Kreide, Stärke, Magnesiumoxid, Titandioxid oder Kautschukgele, enthalten. Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar.
Auch Graphit und Graphene sowie sogenannte "carbon-silica dual-phase filler" sind als Füllstoff denkbar.
Zinkoxid gehört im Rahmen der vorliegenden Erfindung nicht zu den Füllstoffen.

In der Kautschukmischung können Weichmacher in üblichen Mengen enthalten sein. Als Weichmacher können alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Weichmacherharze oder Flüssig-Polymere, wie flüssiges Polybutadien - auch in modifizierter Form - eingesetzt werden. Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Mastikationshilfsmittel, wie z. B. 2,2'-Dibenzamidodiphenyldisulfid (DBD) und
e) Verarbeitungshilfsmittel, wie z. B. Fettsäuresalze, wie z. B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.
Im Gesamtmengenanteil der weiteren Zusatzstoffe finden sich auch 0,1 bis 10 phr, bevorzugt 1 bis 8 phr, besonders bevorzugt 1,5 bis 4 phr, Zinkoxid (ZnO).
Hierbei kann es sich um alle dem Fachmann bekannten Typen an Zinkoxid handeln, wie z. B. ZnO-Granulat oder -Pulver. Es ist üblich, einer Kautschukmischung für die Schwefelvernetzung mit Vulkanisationsbeschleunigern Zinkoxid als Aktivator meist in Kombination mit Fettsäuren (z. B. Stearinsäure) zuzusetzen. Der Schwefel wird dann durch Komplexbildung für die Vulkanisation aktiviert.

Die Vulkanisation der erfindungsgemäßen schwefelvernetzbaren Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS) und/oder N,N'-Diphenylguanidin (DPG).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z. B. Thiuramdisulfide, wie z. B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z. B. Dipentamethylenthiuramtetrasulfid (DPTT), und/oder Dithiophosphate, wie z. B. DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Im Rahmen der vorliegenden Erfindung werden Schwefel und Schwefelspender, inklusive schwefelspendende Silane wie TESPT, und Vulkanisationsbeschleuniger wie oben beschrieben, begrifflich als Vulkanisationsmittel zusammengefasst.

Der erfindungsgemäßen Kautschukmischung wird bei deren Herstellung bevorzugt wenigstens ein Vulkanisationsmittel ausgewählt aus der Gruppe enthaltend Schwefel und Schwefelspender und Vulkanisationsbeschleuniger in der Fertigmischstufe zugegeben. Hierdurch lässt sich aus der gemischten Fertigmischung durch Vulkanisation eine schwefelvernetzte Kautschukmischung, insbesondere für die Anwendung im Fahrzeugreifen, herstellen.

Die Begriffe "vulkanisiert" und "vernetzt" werden im Rahmen der vorliegenden Erfindung synonym verwendet.

Die Herstellung der erfindungsgemäßen schwefelvernetzbaren Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung kann für unterschiedlichste Gummiartikel, wie Bälge, Förderbänder, Luftfedern, Gurte, Riemen, Schläuche oder Schuhsohlen, eingesetzt werden.

Vorzugsweise findet die Kautschukmischung jedoch Anwendung in Fahrzeugreifen, wobei darunter Fahrzeugluftreifen und Vollgummireifen, inklusive Reifen für Industrie- und Baustellenfahrzeuge, LKW-, PKW- sowie Zweiradreifen zu verstehen sind.

Die Kautschukmischung wird bevorzugt in Nutzfahrzeugreifen eingesetzt. Unter Nutzfahrzeugreifen werden dabei Reifen für solche Kraftfahrzeuge verstanden, die nach ihrer Bauart und Einrichtung zum Transport von Personen oder Gütern bestimmt sind, oder zum Ziehen von Anhängern, aber keine Personenkraftwagen oder Krafträder sind (z. B. Busse, Lastkraftwagen, Nutzfahrzeuge für Einsatzkräfte, Traktoren, Baustellenfahrzeuge, u. a.).

Gemäß einer bevorzugten Ausgestaltung der Erfindung besteht der Laufstreifen des Nutzfahrzeugreifens zumindest zum Teil aus der mit Schwefel vernetzten Kautschukmischung. Hier wirken sich die positiven Eigenschaften der Kautschukmischung im Hinblick auf den Rollwiderstand und/oder das Rissverhalten besonders positiv aus.

Der Laufstreifen kann ganz oder nur zu einem Teil aus der Kautschukmischung bestehen. So kann der Laufstreifen beispielsweise eine Cap/Base-Konstruktion aufweisen, wobei nur die Cap oder nur die Base aus der Kautschukmischung gemäß Anspruch 1 bestehen können. Unter "Cap" ist im Rahmen der vorliegenden Erfindung der mit der Fahrbahn in Berührung kommende Teil des Laufstreifens zu verstehen, der radial außen angeordnet ist (Laufstreifenoberteil oder Laufstreifencap). Unter "Base" ist im Rahmen der vorliegenden Erfindung der Teil des Laufstreifens zu verstehen, der radial innen angeordnet ist, und somit im Fahrbetrieb nicht oder nur am Ende des Reifenlebens mit der Fahrbahn in Berührung kommt (Laufstreifenunterteil oder Laustreifenbase).

Die erfindungsgemäße Kautschukmischung ist ferner auch für Laufstreifen geeignet, die aus verschiedenen nebeneinander und/oder untereinander angeordneten Laufstreifenmischungen bestehen (Multikomponentenlaufstreifen).

Zur Verwendung als Laufstreifen in Nutzfahrzeugreifen wird die Mischung als Fertigmischung vor der Vulkanisation in die Form eines Laufstreifens gebracht und bei der Herstellung des Fahrzeugreifenrohlings wie bekannt aufgebracht. Die erfindungsgemäße Kautschukmischung sorgt dabei für eine sehr gute Extrudierbarkeit. Der Laufstreifen kann aber auch in Form eines schmalen Kautschukmischungsstreifens auf einen Reifenrohling aufgewickelt werden. Auch dieses Verfahren lässt sich mit der erfindungsgemäßen Kautschukmischung problemlos durchführen.

Die Erfindung soll nun anhand von Vergleichs- und Ausführungsbeispielen, die in der Tabelle 1 zusammengefasst sind, näher erläutert werden.
Die Vergleichsmischung ist dabei mit V, die erfindungsgemäßen Mischungen sind mit E gekennzeichnet.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde. Die Mooney-Viskositäten der Mischungen wurden gemäß ASTM D1646 ermittelt.

Aus sämtlichen Mischungen wurden Prüfkörper durch Vulkanisation über 20 min unter Druck bei 160 °C hergestellt und mit diesen Prüfkörpern für die Kautschukindustrie übliche Materialeigenschaften mit den im Folgenden angegebenen Testverfahren ermittelt.
- Shore-A-Härte bei Raumtemperatur (RT) und 70 °C gemäß DIN ISO 7619-1
- Rückprallelastizität (Rückpr.) bei Raumtemperatur und 70 °C gemäß DIN 53 512
- Spannungswert bei 300% Dehnung bei Raumtemperatur gemäß DIN 53 504
- Zugfestigkeit bei Raumtemperatur gemäß DIN 53 504
- Bruchdehnung bei Raumtemperatur gemäß DIN 53504
- Verlustfaktor tan d, synonym zu tan δ, bei 70 °C aus dynamisch-mechanischer Messung gemäß DIN 53 513
- Abrieb bei Raumtemperatur gemäß DIN53 516
- Hochgeschwindigkeitsbruchdehnung als Reißenergie pro verformtem Volumen bei Raumtemperatur gemäß High Speed Tear Energy Test nach DIN EN 10 045 (HSTE)
- Weiterreißwiderstand nach Graves bei Raumtemperatur gemäß DIN 53 515

**Tabelle 1**

| **Bestandteile** | **Einheit** | **1(V)** | **2(E)** | **3(E)** |
|---|---|---|---|---|
| Naturkautschuk | phr | 100 | 100 | 100 |
| Ruß N220 | phr | 40 | 40 | 40 |
| Kieselsäure A^{a} | phr | 17 | - | - |
| Kieselsäure B^{b} | phr | - | 17 | 17 |
| Alterungsschutzmittel | phr | 2,5 | 2,5 | 2,5 |
| Ozonschutzwachs | phr | 2,5 | 2,5 | 2,5 |
| Zinkoxid | phr | 3 | 3 | 3 |
| Stearinsäure | phr | 2 | 2 | 2 |
| Silan-Kupplungsagens^{c} | phr | - | - | 0,91 |
| Beschleuniger | phr | 1,4 | 1,4 | 1,05 |
| Schwefel | phr | 1,4 | 1,4 | 1,05 |
| Verzögerer | phr | 0,1 | 0,1 | 0,1 |

| **Eigenschaften** | | | | |
|---|---|---|---|---|
| Mooney-Viskosität (ML1+4) | - | 102,8 | 86,3 | 87,1 |
| Shore A-Härte bei RT | ShoreA | 59 | 59,9 | 58,8 |
| Shore A-Härte bei RT | ShoreA | 54,9 | 55,6 | 53,6 |
| Rückprallelastizität bei RT | % | 47 | 47,4 | 45,6 |
| Rückprallelastizität bei 70°C | % | 59,2 | 62,1 | 58,2 |
| Spannungswert bei 300% | MPa | 11,7 | 12,1 | 11,6 |
| Zugfestigkeit | MPa | 23,1 | 23,5 | 22,7 |
| Bruchdehnung | % | 527 | 527 | 530 |
| tan d bei 70 °C | - | 0,134 | 0,124 | 0,142 |
| Abrieb | mm³ | 148 | 129 | 147 |
| Hochgeschwindigkeitsbruchdehnung | MJ/m³ | 14,5 | 10,2 | 14,1 |
| Weiterreißwiderstand nach Graves | N/mm | 112,0 | 114,4 | 109,4 |

| | | | | |
|---|---|---|---|---|
| ^{a)} Ultrasil^{®} VN3 GR, CTAB 167 m²/g, BET 180 m²/g, Fa. Evonik Industries ^{b)} MFIL-100, CTAB 116 m²/g, BET 114 m²/g, Fa. Madhu ^{c)} Si 266^{®}, 75 Gew.-% S₂-Silan (TESPD) Fa. Evonik Industries | | | | |

Aus der Tabelle 1 wird ersichtlich, dass die erfindungsgemäßen Kautschukmischungen eine deutlich reduzierte Mooney-Viskosität aufweisen. Sie lassen sich daher hervorragend verarbeiten. Man erhält bessere, extrudierte Komponenten. Gleichzeitig hat die Mischung 2(E) nach Vulkanisation eine ähnliche Härte bei höherer Rückprallelastizität bei 70 °C, was bei Verwendung als Laufstreifen zu einem reduzierten Rollwiderstand führt. Der Spannungswert bei 300 % Dehnung wird ebenfalls erhöht, während die Zugfestigkeit und Bruchdehnung auf demselben Niveau verbleiben. Zusätzlich wird bei der Mischung 2(E) der Abrieb verbessert.

Die Mischung 3(E), die zusätzlich noch ein Silan-Kupplungsagens enthält, zeichnet sich neben der reduzierten Mooney-Viskosität dadurch aus, dass alle anderen Eigenschaften auf dem Niveau der Vergleichsmischung 1(V) verbleiben, insbesondere verbleibt die Hochgeschwindigkeitsbruchdehnung als Maß für die Rissbeständigkeit auf hohem Niveau.

## Patentansprüche

1. Schwefelvernetzbare Kautschukmischung, insbesondere für Laufstreifen von Nutzfahrzeugreifen, enthaltend
- wenigstens einen Dienkautschuk und
- 1 bis 25 phr zumindest einer Kieselsäure mit einer CTAB-Oberfläche (gemäß ASTM D 3765) von 50 bis 130 m²/g und einer Stickstoff-Oberfläche (BET-Oberfläche) (gemäß DIN ISO 9277 und DIN 66132) von 60 bis 140 m²/g.

2. Kautschukmischung nach Anspruch 1, **dadurch gekennzeichnet, dass** sie 10 bis 25 phr zumindest einer Kieselsäure mit einer CTAB-Oberfläche (gemäß ASTM D 3765) von 50 bis 130 m²/g und einer Stickstoff-Oberfläche (BET-Oberfläche) (gemäß DIN ISO 9277 und DIN 66132) von 60 bis 140 m²/g enthält.

3. Kautschukmischung nach zumindest einem der vorhergehenden Ansprüche, **dadurch gekennzeichnet, dass** die Kieselsäure eine CTAB-Oberfläche (gemäß ASTM D 3765) von 70 bis 120 m²/g und eine Stickstoff-Oberfläche (BET-Oberfläche) (gemäß DIN ISO 9277 und DIN 66132) von 80 bis 125 m²/g aufweist.

4. Kautschukmischung nach zumindest einem der vorhergehenden Ansprüche, **dadurch gekennzeichnet, dass** sie 80 bis 100 phr Naturkautschuk enthält.

5. Kautschukmischung nach zumindest einem der vorhergehenden Ansprüche, **dadurch gekennzeichnet, dass** sie frei von Silan-Kupplungsagenzien ist.

6. Kautschukmischung nach zumindest einem der Ansprüche 1 bis 4, **dadurch gekennzeichnet, dass** sie 3 bis 10 phf zumindest eines Silan-Kupplungsagenzes enthält.

7. Nutzfahrzeugreifen, dessen Laufstreifen zumindest zum Teil aus der mit Schwefel vernetzten Kautschukmischung nach zumindest einem der Ansprüche 1 bis 6 besteht.
